(19) Europäisches Patentamt
European Patent Office
Office européen des brevets

(11) EP 0 362 852 B1

(12) **EUROPEAN PATENT SPECIFICATION**

(45) Date of publication and mention
of the grant of the patent:
**03.01.1996  Bulletin 1996/01**

(51) Int Cl.6: **G11B 7/00**, G11B 7/24

(21) Application number: **89118519.1**

(22) Date of filing: **05.10.1989**

(54) **Information-recording thin film and method for recording and reproducing information**

Informationsaufzeichnungsdünnschicht und Methode zur Aufnahme und Wiedergabe von Information

Couche mince pour l'enregistrement d'information et méthode pour l'enregistrement et la reproduction d'information

(84) Designated Contracting States:
**DE NL**

(30) Priority: **05.10.1988  JP 249890/88**
**05.12.1988  JP 306052/88**

(43) Date of publication of application:
**11.04.1990  Bulletin 1990/15**

(73) Proprietors:
• **HITACHI, LTD.**
**Chiyoda-ku, Tokyo 101 (JP)**
• **Hitachi Maxell Ltd.**
**Osaka-fu (JP)**

(72) Inventors:
• **Tamura, Reiji Shihoryo, 1468-5**
**Yuki-gun, Ibaraki-ken (JP)**

• **Terao, Motoyasu**
**Nishitama-gun, Tokyo (JP)**
• **Miyauchi, Yasushi**
**Akatsukicho-1-chome, Hachioji-shi (JP)**
• **Andoo, Keikichi**
**Musashino-shi (JP)**
• **Nishida, Tetsuya**
**32, Koyasumachi-2-chome, Hachioji-shi (JP)**

(74) Representative: **Patentanwälte**
**Beetz - Timpe - Siegfried Schmitt-Fumian - Mayr**
**D-80538 München (DE)**

(56) References cited:
**EP-A- 0 195 532**

• **PATENT ABSTRACTS OF JAPAN vol. 12, no. 238 (P-726) 07 July 1988, & JP-A- 63 029333**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

This invention relates to recording of information, particularly to an information-recording thin film capable of recording frequency modulated analog signals such as images, voices, etc. or digital information such as electronic computer data, facsimile signal, digital audio signal, etc. in real time by a recording beam, such as laser beam, electron beam, etc., an information recording medium comprising such a thin film and to a method for recording and reproducing information by the thin film.

Principles of recording on a thin film by a laser beam are various, and the recording based on changes in atomic arrangement such as phase transition (which may be also called "phase change") of film material,photo-darkening, etc. brings about no substantial deformation of the film, and thus has such an advantage that a two-side disk can be obtained by directly bonding two disks. Furthermore, rewriting of recording is possible by properl'y selecting a composition. Many inventions of such recording have been so far made, and one of the earliest ones is diclosed in US Patent No. 3,530,441, where many thin films of Te-Ge system, As-Te-Ge, system, Te-O system, etc. are mentioned. Japanese Patent Application Kokai (Laid-Open) No. 54-41902 discloses various film compositions such as $Ge_{20}Tl_5Sb_5Se_{70}$, $Ge_{20}Bi_{10}Se_{70}$, etc., and Japanese Patent Application Kokai (Laid-open) No. 57-24039 discloses films of $Sb_{25}Te_{12.5}Se_{62.5}$, $Cd_{14}Te_{14}Se_{72}$, $Bi_2Se_3$, $Sb_2Se_3$, $In_{20}Te_{20}Se_{60}$, $Bi_{25}Te_{12.5}Se_{62.5}$, CuSe and $Te_{33}Se_{67}$. Recording thin films according to the preambles of claims 1 and 2 are known from JP-A-63 029 333. However, all of these prior art thin films have disadvantages, when used as once-writable (write-once) or rewritable (reversible) phase transition recording film, such as low crystallization speed, less absorption of semi-conductor laser beam and consequent poor sensitivity, inadequate intensity of reproduced signal, large deformation of reproduced wave form, poor stability of amorphous state and poor oxidation resistance, and there have been problems in their practical applications.

SUMMARY OF THE INVENTION

The object of the present invention is to provide an information-recording thin film with good recording and reproducing characteristics, high sensitivity and high stability, an information recording medium comprising such a thin film and a method for recording and reproducing information by the thin film.

As a first means for attaining the object of the present invention, the present invention provides an information-recording thin film according to claim 1. Its average composition in the film thickness direction of the information-recording thin film is represented by the following general formula:

$$Sn_x Sb_y Te_z Se_\alpha A_\beta B_\gamma C_\delta$$

wherein X, Y, Z, $\alpha$, $\beta$, $\gamma$ and $\delta$ are in ranges of $3 \leqq x \leqq 50$, $10 \leqq y \leqq 70$, $10 \leqq z+\alpha \leqq 87$, $0.1 \leqq z/\alpha \leqq 10$, $0 \leqq \beta \leqq 20$, $0 \leqq \gamma \leqq 30$ and $0 \leqq \delta \leqq 30$ in atomic percentage. An information recording medium is provided having a substrate and an information recording thin film of the above-mentioned constitution.

When x is less than 3, much time is required for erasing, whereas when x is more than 50, the recording becomes impossible. When y is less than 10, the crystallization temperature is lowered and much time is required for erasing, whereas when y is more than 70, much time is required for erasing. When z+$\alpha$ is less than 10, much time is required for erasing, and even when z+$\alpha$ is more than 87, much time is required for erasing. When z/$\alpha$ is less than 0.1, the recording power becomes larger, whereas when z/$\alpha$ is more than 10, the degree of signal modulation becomes smaller. When $\beta$ is more than 20, much time is required for erasing. When $\gamma$ is more than 30, the recording becomes impossible $\beta$. Even when $\delta$ is more than 30, the crystallization temperature is not increased.

A is at least one element of Tl, halogen elements such as I, etc. and alkali metals such as Na, etc., and these elements have such effects to cut the chain-shaped atomic arrangements of Te or Se in materials containing Te or Se or accelerate the crystallization speed, but lower the crystallization temperature and thus the stability of amorphous state will be deteriorated unless a material having a higher crystallization temperature is added thereto.

B is at least one element of Au, Ag, Cu, Pd, Ta, W, Ir, Sc, Y, Ti, Zr, V, Nb, Cr, Mo, Mn, Fe, Ru, Co, Rh and Ni.

C is at least one of other elements than Sn, Sb, Te, Se and the elements represented by A and B as defined above as to the first means for attaining the object of the invention and is, for example, at least one of Hg, Al, B, C, Si, N, P, O, lanthanide elements, actinide elements, alkaline earth metal elements, inert gas elements, etc. One element or a plurality of elements from those represented by A and B as defined above can be deemed as group C elements, insofar as other elements of the individual groups A and B have been already used. For example, Ni can be added to a Sn-Sb-Te-Se-Co system in an amount of less than 30 at. % of Ni and in such a range that the sum total of Ni content and Co content be less than 30 at. % of the upper limit of the content of the group B elements. Among these elements, it is preferable that the content of Al, Hg, alkaline earth metal elements and inert gas elements be less than 10 at. %.

The composition of the present recording thin film may be changed in the film thickness direction, so far as the

EP 0 362 852 B1

average composition in the film thickness direction is kept within the afore-mentioned range, and it is preferable that the composition changes continuously.

The recording is carried out with an energy beam having such a power for such an irradiation time as to cause a change in the atomic arrangement (change from one phase to another) without any large deformation of the recording thin film.

As a second means for attaining the object of the present invention, the present invention provides an information recording thin film according to claim 2. It has an average composition in the film thickness direction of the information-recording thin film represented by the following general formula:

$$Sb_x Te_y A'_z B'_\alpha C'_\beta D_\gamma$$

wherein x y, z, $\alpha$, $\beta$ and $\gamma$ are in ranges of $5 \leqq x \leqq 70$, $10 \leqq y \leqq 85$, $3 \leqq z \leqq 50$, $0 \leqq \alpha \leqq 20$, $0 \leqq \beta \leqq 30$ and $0 \leqq \gamma \leqq 30$.

A' is at least one element of Sn, Bi, Pb, Ga, Au and In, and B' is at least one element of Tl, halogen elements such as I, etc., and alkali metals such as Na, etc., and these elements have such effects to cut the chain-shaped atomic arrangements of Te or Se in materials containing Te or Se or accelerate the crystallization speed, but lower the crystallization temperature and thus the stability of amorphous state will be deteriorated unless a material having a higher crystallization temperature is added thereto.

C' is at least one element of Ag, Cu, Pd, Ta, W, Ir, Sc, Y, Ti, Zr, V, Nb, Cr, Mo, Mn, Fe, Ru, Co, Rh and Ni, and D is other element than Sb, Te and the elements represented by A', B' and C' as defined above and is, for example, at least one of Hg, Se, S, As, Al, B, C, Si, N, P, O, lanthanide elements, actinide elements, alkaline earth metal elements, inert gas elements, etc. One element or a plurality of elements from those represented by A', B', and C' as defined above can be deemed as group D elements, insofar as other elements of the individual groups A', B' and C' have been already used. For example, Ni can be added to a Sb-Te-Sn-Co system in an amount of less than 30 at.% of Ni and in such a range that the sum total of Ni content and Co content be less than 30 at.% of the upper limit of the content of the group C' elements. Among these elements, it is preferable that the content of Al, Hg, alkaline earth metal elements and inert gas elements be less than 10 at.%.

BRIEF DESCRIPTION OF THE DRAWINGS

Fig. 1 is a cross-sectional view of the structure of a recording member according to Examples 1 and 3 of the present invention.

Fig. 2 shows an internal structure of a vacuum evaporation apparatus for use in preparation of the present recording member.

Fig. 3 is a diagram showing a recording laser wave form for the overwriting according to Example 1 of the present invention.

Fig. 4 is a cross-sectional view of the structure of a recording member according to Example 2 of the present invention.

Fig. 5 is a diagram showing a recording laser wave form for the overwriting according to Example 2 of the present invention.

Fig. 6 is a diagram showing a recording laser wave form for the overwriting according to Example 3 of the present invention.

DETAILED DESCRIPTION OF THE PREFERRED EMBODIMENTS

The elements of the individual groups used as the first means for attaining the object of the present invention play the following roles.

Sn, Sb, Te and Se can maintain the amorphous state stably and can perform crystallization fast at the recording and erasing, when contained in appropriate ratios.

Elements such as Co, etc., represented by B, can facilitate absorption of long wavelength light such as semi-conductor laser beam, etc., and can also effectively increase the recording sensitivity and make the crystallization proceed faster.

Elements such as Tl, etc., represented by A, can effectively increase the crystallization speed and the stability of amorphous state. When the group A element and the group B element are contained together, high speed crystallization can be attained with a good stability of amorphous state and a high recording sensitivity.

When either group A element or group B element is to be contained, it is preferable to add the group A element because of easier formation of the film, but the oxidation resistance is lowered. Elements such as Ar, etc., represented by C, have no particularly remarkable effect by their addition, and have no large adverse effect so far as added in a small amount. Among them, the rare earth elements, etc. have a role of increasing the reproduced signal intensity and increasing the crystallization temperature, when contained in an amount of 1 to 20 at.%.

3

The present information-recording thin film within the foregoing composition ranges as the first means for attaining the object of the invention has a distinguished recording and reproducing characteristics with a low power laser beam for recording and erasing and also has a good stability.

More preferable ranges for X, Y, Z, $\alpha$, $\beta$, $\gamma$ and $\delta$ are as follows: ranges of $5 \leqq x \leqq 30$, $16 \leqq y \leqq 45$, $35 \leqq z+\alpha \leqq 80$, $0.2 \leqq z/\alpha \leqq 5$, $0 \leqq \beta \leqq 15$, $0 \leqq \gamma \leqq 20$, and $0 \leqq \delta \leqq 20$.

Particularly preferable ranges for X, Y, Z , $\alpha$, $\beta$, $\gamma$, and $\delta$ are as follows: ranges of $7 \leqq x \leqq 23$, $22 \leqq y \leqq 40$, $40 \leqq z+\alpha \leqq 70$, $0.25 \leqq z/\alpha \leqq 4$, $0 \leqq \beta \leqq 10$, $0 \leqq \gamma \leqq 10$, and $0 \leqq \delta \leqq 10$.

In each of the foregoing ranges, the film is easy to make when $\delta \doteqdot 0$. In a range of $1 \leqq \beta+\gamma \leqq 15$, more complete erasing can be assured and the time for maintaining the recording can be prolonged.

Among the elements represented by A, Tl is particularly preferable, I is next preferable, and then other halogen elements such as Cl, etc. are preferable.

Among the elements represented by C, rare earth elements are preferable.

Changes in the contents of individual elements in the film thickness direction are usually small, and the presence even of any patternwise change is not objectionable. As to Sb, Se and S, it is preferable that the contents of Sb, Se and S are increased in the neighborhood of one of the boundaries of a recording thin film (including a boundary to other layer), as compared with those at the inside, and the oxidation resistance can be increased thereby.

The elements of the individual groups used as the second means for attaining the object of the present invention play the following roles.

Sb, Te and elements such as Sn, etc., represented by A', can maintain the amorphous state stably and can perform crystallization fast at the recording and erasing, when contained in appropriate ratios.

Elements such as Co, etc. represented by C', can facilitate absorption of long wavelength light such as semi-conductor laser beam, etc., and can also effectively increase the recording sensitivity and make the crystallization proceed faster.

Elements such as Tl, etc., represented by B', can effectively increase the crystallization speed and the stability of amorphous state. When the group B' element and the group C' element are contained together, high speed crystallization can be attained with a good stability of amorphous state and a high recording sensitivity.

When either group B' element or group C' element is to be contained, it is preferable to add the group B' element because of easier formation of the film, but the oxidation resistance is lowered. Elements such as Ar, etc., represented by D have no particularly remarkable effect by their addition, and have no large adverse effect so far as added in a small amount. Among them, the rare earth elements, etc. have a role of increasing the reproduced signal intensity and increasing the crystallization temperature, when contained in an amount of 1 to 20 at.%. Furthermore, addition of 1 to 20 at.% of Se and S is effective for increasing the oxidation resistance so far as other elements are kept in constant ratios, but the heat resistance is a little lowered. An Se content of 1 to 3 at.% is preferable also for the erasing characteristics.

More preferable ranges for x, y, z, $\alpha$, $\beta$, and $\gamma$ as the second means for attaining the object of the present invention are as follows: ranges of $10 \leqq x \leqq 45$, $35 \leqq y \leqq 80$, $5 \leqq z \leqq 30$, $0 \leqq \alpha \leqq 15$, $0 \leqq \beta \leqq 20$, and $0 \leqq \gamma \leqq 10$.

More preferable ranges for x, y, z, $\alpha$, $\beta$, and $\gamma$ as follows: ranges of $13 \leqq x \leqq 40$, $47 \leqq y \leqq 70$, $7 \leqq z \leqq 23$, $0 \leqq \alpha \leqq 10$, $0 \leqq \beta \leqq 10$, and $0 \leqq \gamma \leqq 10$.

When the element represented by A' is Au, the recording sensitivity is lowered, so long as the Te content is lower, and a range of $60 \leqq y \leqq 70$ is particularly preferable.

In each of the foregoing ranges, the film is easy to make when $\gamma \doteqdot 0$. In a range of $1 \leqq \alpha+\beta \leqq 20$, more complete erasing can be assured and the time for maintaining the recording can be prolonged. In ranges of $1 \leqq \alpha \leqq 10$ and $1 \leqq \beta \leqq 10$, the degree of signal modulation can be increased.

Among the elements represented by B', Tl is particularly preferable, I is next preferable and then other halogen atoms such as Cl, etc. are preferable. Among the elements represented by D, the rare earth elements are preferable. Among the elements represented by A', Pb, Ga and In lower the oxidation resistance a little, but In has distinguished recording and erasing characteristics. Au lowers the recording sensitivity, but can increase the oxidation resistance.

It is preferable that at least one side of the present recording film is tightly covered and protected with other material, and it is more preferable to protect the two sides. The protective layer may be composed of a organic material such as acrylic resin, polycarbonate, polyolefin, epoxy resin, polyimides, polyamides, polystyrene, polyethylene, polyethylene terephthalate, fluorocarbon resin such as polytetrafluoroethylene (Teflon), etc., which can serve as a substrate, or may be composed of inorganic materials containing oxides, fluorides, nitrides, sulfides, carbides, borides, boron, carbon or metals as the main component, or may be composed of their composite materials. A substrate composed of glass, quartz, sapphire, iron, titanium, or aluminum as the main component can work as the inorganic protective layer on one side. Among the organic and inorganic materials, tight covering with the inorganic materials is preferable with respect to the heat resistance. However, a thicker inorganic material layer (excluding the application as a substrate) is liable to cause at least one of crack development, decrease in transmissivity, and decrease in sensitivity, and thus the inorganic material layer must be made thinner, and it is preferable to tightly cover the opposite side of the inorganic material layer to the recording film side with a thicker organic material layer to increase the mechanical strength. The organic material layer may be a substrate. Deformation can be made less thereby. The organic materials for use to this end include, for example, polystyrene, polytetrafluoroethylene (Teflon), polyimides, acrylic resin, polycarbonate, epoxy resin, ethylene-vinyl acetate copolymer, etc. known as hot-melt adhesives, and tackifying agents, etc. UV light curing resin may be used. A protective layer composed of inorganic materials can be formed as such by electron beam deposition, sputtering, etc. or can be more readily formed by reactive sputtering, or by forming a film composed of at least one element of metals, semi-metals and semiconductors, and reacting the film with at least one of oxygen, sulfur and nitrogen. Inorganic material protective layers are composed of, for example, oxides of at least one element selected from the group consisting of Ce, La, Si, In, Al, Ge, Pb, Sn, Bi, Te, Ta, Sc, Y, Ti, Zr, V, Nb, Cr, and W, sulfides or selenides of at least one element selected from the group consisting of Cd, Zn, Ga, In, Sb, Ge, Sn, and Pb, fluorides of Mg, Ce, Ca, etc., nitrides of Si, Al, Ta, B, etc., and boron and carbon, and the main component has a composition approximating to one of, for example, $CeO_2$, $La_2O_3$, $SiO$, $SiO_2$, $In_2O_3$, $Al_2O_3$, $GeO$, $GeO_2$, $PbO$, $SnO$, $SnO_2$, $Bi_2O_3$, $TeO_2$, $WO_2$, $WO_3$, $Ta_2O_5$, $Sc_2O_3$, $Y_2O_3$, $TiO_2$, $ZrO2$, $CdS$, $ZnS$, $CdSe$, $ZnSe$, $In_2S_3$, $In_2Se_3$, $Sb_2S_3$, $Sb_2Se_2$, $Ga_2S_3$, $Ga_2Se_3$, $MgF_2$, $CeF_3$, $CaF_2$, $GeS$, $GeSe$, $GeSe_2$, $SnS$, $SnS_2$, $SnSe$, $SnSe_2$, $PbS$, $PbSe$, $Bi_2Se_3$, $Bi_2S_3$, $TaN$, $Si_3N_4$, $AlN$, $Si$, $TiB_2$, $B_4C$, $SiC$, $B$ and $C$ or their mixtures.

Among them, sulfides approximating to ZnS are preferable with respect to an appropriately large refractive index and a high stability of the film. Among these materials, nitrides have not so high surface reflectivity and can produce a stable film, and a composition approximating to $TaN$, $Si_3N_4$ or AlN (aluminum nitride) is preferable with respect to rigidity. Preferable oxides have a composition approximating to $Y_2O_3$, $Sc_2O_3$, $CeO_2$, $TiO_2$, $ZrO_2$, $SiO$, $Ta_2O_5$, $In_2O_3$, $Al_2O_3$, $SnO_2$ or $SiO_2$. Amorphous materials of Si containing hydrogen are also preferable. By formation of a protective layer as mentioned above, an increase in noise by deformation of a recording film at recording and rewriting can be prevented.

When recording is carried out by phase transition (change), it is preferable to crystallize the entire surface of a recording film in advance, but in the case of a substrate composed of an organic material, it is impossible to bring the substrate to a high temperature, and thus crystallization must be carried out in other manner. That is, it is preferable that crystallization is carried out by exposure to a laser beam, or an electron beam condensed to a spot diameter of 2 μm or less, exposure to UV light from a xenon lamp, a mercury lamp, etc. together with heating, exposure to light from a flash lamp, exposure to a large light spot from a high power gas laser, or a combination of exposure to laser beam and heating, etc. In the case of exposure to light from a gas laser, a good crystallizing efficiency can be obtained with a light spot diameter (half-width) of 5 μm to 5 mm. Crystallization may be carried out only on the recording track, while keeping the intertrack spaces in an amorphous state. Crystallization can be also carried out only on the intertrack spaces. For example, when a film composed of Sn, Sb, Te and Se as the main components is formed from a plurality of evaporation sources by rotating vapor deposition, Sn, Sb, Te and Se are often not substantially in a combined state right after the vapor deposition. In case of forming a film by sputtering, the atomic arrangement is in a highly random state. In these cases, the recording track is exposed to a laser beam of high power density to melt the film, if necessary. When the recording is carried out by formation of amorphous state, and when te recording track is further exposed to a laser beam of low power density to effect crystallization, the reflectivity is liable to become uniform along the entire track. It is also possible to record on a recording thin film in an amorphous state by crystallization. It is also possible to conduct the recording with a power-modulated laser beam between the crystallization power level and the amorphous state-formation power level.

When a thin film is exposed to light, the reflected light is generally a superposition of a reflected light from the thin film surface and another reflected light from the back side of the thin film, and thus undergoes an interference. When a signal is read through changes in the reflectivity, the effect of interference is increased by providing a reflecting (absorbing) layer near the recording film, and consequently the read-out signal can be intensified. To more increase the effect of interference, it is preferable to provide an intermediate layer between the recording film and the reflecting (absorbing) layer. The intermediate layer is also effective for preventing mutual diffusion between the recording film and the reflecting layer at the recording and rewriting.

The intermediate layer can perform at least some of recording by selecting the materials of the intermediate layer, for example, by making the intermediate layer of selenide, that is, by diffusing at least some of elements of the recording film into the intermediate layer or diffusing at least some of elements of the intermediate layer into the recording film or the reflecting layer.

It is preferable that the intermediate layer has a thickness of 3 nm to 600 nm, selected so that the reflectivity of the recording member can become a minimum at the wavelength of read-out light in a recorded or erased state. The reflecting layer can be formed between the recording film and the substrate, or on the opposite sides of the recording film. Particularly preferable thickness of the intermediate layer for the first means for attaining the object of the present invention is in ranges of 5 nm to 130 nm, 180 nm to 230 nm, 280 nm to 330 nm and 380 nm to 430 nm. In case of the second means for attaining the object of the present invention, particularly preferable thickness of the intermediate layer is in range of 60/N nm to 160/N nm and 470/N nm to 570/N nm, where N is the refractive index of the intermediate layer. It is also preferable to form a protective layer composed of the above-mentioned inorganic material on the opposite side of the reflecting layer to the intermediate layer. These three layers (the intermediate layer, the reflecting layer and the protective layer) provide a stronger protective layer on the whole than a single protective layer.

Metals, semi-metals and semi-conductors can be used for the reflecting layer, but it is preferable to make the reflecting layer from a layer of single substance such as Au, Ag, Cu, Al, Ni, Fe, Co, Cr, Ti, Pd, Pt, W, Ta or Mo,, or an alloy or a plurality of alloy of some of these elements as the main components, or a composite layer of these elements with other substances such as an oxygen in an oxide form, etc. When a reflecting layer made from a material having a high thermal conductivity, e.g., 2.0 W/cm·deg or higher, such as Au, etc. as the main component is used, the reflecting layer is capable of increasing the thermal conductivity and effectively ensures the formation of amorphous state when exposed to a laser beam of high power, even if a recording film capable of undergoing high speed crystallization is used. In that case, it is also particularly preferable to make the intermediate layer from a material having a composition approximating to $Al_2O_3$, AlN, $Si_3N_4$, ZnS, etc. having a higher thermal conductivity or a material having an intermediate thermal conductivity (0.02 W/cm·deg to 0.1 W/cm·deg) such as $SiO_2$, etc. to make the intermediate layer thinner.

The present recording film can be in a dispersion in the oxides, fluorides, nitrides, organic materials, etc., or carbon or carbides to be applicable as a protective layer, as mentioned above, by co-vapor deposition or co-sputtering, whereby in some cases the light absorption coefficient can be adjusted or the reproduced signal intensity can be increased. Preferable mixing ratio is such that a proportion of oxygen, fluorine, nitrogen, and carbon in the entire film be 40 at.% or less. By making a composite film in this manner, usually the crystallization speed is lowered and the sensitivity is lowered. However, the sensitivity is increased by making a composite film with an organic material.

Preferable ranges for the thickness of the individual members are as follows:

Recording film without a reflecting layer:
15 nm to 500 nm, particularly preferably 25 nm to 300 nm with respect to the reproduced signal intensity and recording sensitivity;

Recording film with a reflecting layer:
15 nm to 150 nm, particularly preferably 20 nm to 60 nm;

Protective layer of inorganic material:
5 nm to 500 nm; in the case of protection by a substrate of inorganic material itself, 0.1 to 20 mm;

Protective layer of organic material:
10 nm to 10 mm, or 500 nm to 10 mm;

Intermediate layer:
3 to 600 nm; it is preferable that the intermediate layer is thinner than the protective layer; most preferably 20 nm to 90 nm;

Light-reflecting layer: 5 to 300 nm;

Protective layer of inorganic material adjacent to the light-reflecting layer:
50 nm to 500 nm

The afore-mentioned materials and layer thickness of the respective layers other than the recording film are effective not only for the present recording film, but also for other phase change-type recording films, magneto-optical recording films, mutual diffusion-type recording films, etc.

The foregoing individual layers can be formed by vacuum evaporation, evaporation in a gas, sputtering, ion beam deposition, ion plating, electron beam deposition, casting, spin coating, plasma polymerization, etc. upon proper selection. It is most preferable to form all of the protective layer, the recording film, the intermediate layer, the reflecting layer and the protective layer adjacent to the reflecting layer by sputtering.

In the present recording film, it is not always necessary to utilize a change between the amorphous state and the crystalline state in recording, but a change in the optical properties must be made by some change in the atomic arrangement without any substantial change in the form of the film. For example, it may be a change in the crystal grain size or crystal form, or a change between the crystalline state and the meta-stable state ($\pi$, $\gamma$, etc.). Even in the change between the amorphous state and the crystalline state, the amorphous state may not be a complete amorphous state, but can contain part of the crystalline state.

Recording can be carried out by migration of some of atoms constituting the recording film, protective layer and intermediate layer between the recording film and at least one of the protective layer and the intermediate layer by diffusion, chemical reaction, etc. or by both migration and phase change.

The present recording member can be used not only in a disk form, but also in a tape form, a card form or in any other form.

In an optical recording medium capable of recording and reproduction by a light beam, Se-based materials have distinguished oxidation resistance, but have no satisfactory recording sensitivity and Te-based materials have a good recording sensitivity, but have no satisfactory oxidation resistance. On the other hand, Sn-Sb-Te-Se-based materials can maintain both properties at high levels in the medium and thus can provide a distinguished phase change-type recording medium.

The present invention will be described in detail below, referring to Examples.

Example 1

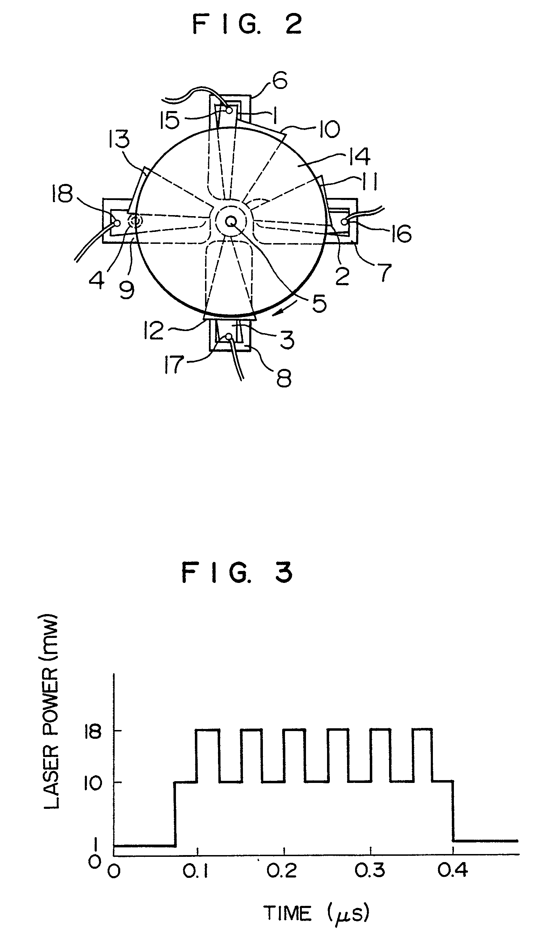

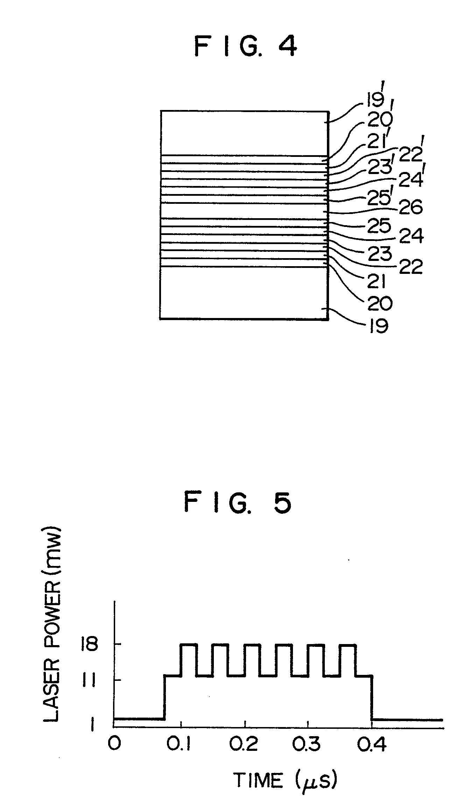

A UV light curing resin replica layer of tracking grooves serving also as a protective layer was formed on the surface of a disk form, chemically reinforced glass plate. The glass disk was 13 cm in diameter and 1.2 mm thick, and one track was divided into 32 sectors, and track addresses and sector addresses were formed in the form of concave and convex pits at the individual intermediate summit parts between the grooves at the starting points of the individual sectors (these parts will be hereinafter referred to as "headers"). At first a $Si_3N_4$ layer, about 300 nm thick, as a protective layer was formed on a substrate 14 by magnetron sputtering. Then, the substrate was disposed in a vacuum evaporation apparatus having an internal structure as shown in Fig. 2, and 4 evaporation sources $\underline{1}$, $\underline{2}$, $\underline{3}$ and $\underline{4}$ were provided in the evaporation apparatus. Three of the evaporation sources were evaporation boats by resistance heating and one thereof was an electron beam evaporation source. These boats and electron beam evaporation source were provided under parts on the substrate $\underline{14}$ destined to record information and substantially on a circumference concentric with the center axis of rotation of the substrate. Sb, Te and Se were placed in the three evaporation boats, respectively, and Sn was placed in the electron beam evaporation source. Between the individual boats and the substrate there were provided masks $\underline{6}$, $\underline{7}$, $\underline{8}$ and $\underline{9}$ having a sector slit and shutters $\underline{10}$, $\underline{11}$, $\underline{12}$ and $\underline{13}$. The substrate $\underline{14}$ was set to rotate at 120 rpm, while an electric current was passed to the individual boats and the electron beam evaporation source was irradiated with an electron beam to evaporate the source materials.

The evaporating rates from the individual evaporation sources were detected by quartz-crystal type film thickness monitors $\underline{15}$, $\underline{16}$, $\underline{17}$ and $\underline{18}$ to control the electric current thereby to make the evaporation rates constant.

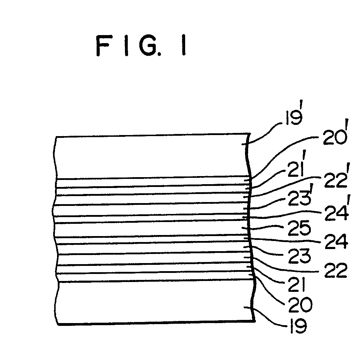

As shown in Fig. 1, a recording film $\underline{21}$ having the composition of $Sn_{14}Sb_{30}Te_{28}Se_{28}$ was vapor deposited to a film thickness of about 30 nm on the $Si_3N_4$ layer $\underline{20}$ on the substrate $\underline{19}$. Then, an intermediate layer $\underline{22}$ having a composition substantially equal to $Si_3N_4$ was successively formed to a film thickness of about 80 nm thereon also by magnetron sputtering. Furthermore, a reflecting layer $\underline{23}$ of Au was formed to a film thickness of about 50 nm thereon by magnetron sputtering. Likewise, a protective layer $\underline{20}'$ having a composition substantially equal to $Si_3N_4$ on another similar substrate 19', and a recording film $\underline{21}'$ having the composition of $Sn_{14}Sb_{30}Te_{28}Se_{28}$, an intermediate layer $\underline{22}'$ having a composition substantially equal to $Si_3N_4$ and a reflecting layer $\underline{23}'$ of Au were successively formed thereon.

Then, $Si_3N_4$ protective layers $\underline{24}$ and $\underline{24}'$ were formed each to a film thickness of about 200 nm on the vapor-deposited layers $\underline{23}$ and $\underline{23}'$ of the thus obtained two substrates $\underline{19}$ and $\underline{19}'$, respectively, and the thus obtained two substrates $\underline{19}$ and $\underline{19}'$ were joined together by pasting through an organic adhesive layer $\underline{25}$ so that the layers $\underline{24}$ and $\underline{24}'$ could be faced inwardly. In this manner, a disk could be prepared.

The thus prepared disk was subjected to recording, reproduction and erasing in the following manner:

The disk was rotated at 1,800 rpm, and one of the recording films was exposed to a beam of argon ion laser (wavelength: 830 nm), kept at a non-recording level and condensed by a lens in the recording head, through the substrate. The reflected light was detected to drive the head so that the center of the light spot could always fall onto the intermediate part between the tracking grooves. The influence of noises generated from the grooves could be prevented by making the intermediate part between the grooves a recording track. Automatic focussing was carried out so that the focus could fall on the recording film while conducting the tracking in this manner. At first, the recording film on the recording tracks was heated by continuous irradiation of a laser beam of high power density to subject the individual elements to reaction and crystallization.

An appropriate laser power range for the formation of an amorphous state was higher than the power for the crystallization and lower than the power capable of causing a remarkable transformation or making holes. An appropriate laser power range for the crystallization was high enough to cause the crystallization and lower than the power for causing formation of an amorphous state.

Recording in the optical disk drive (recording and reproducing apparatus) was carried out in the following manner.

The disk was rotated at 1,800 rpm, and one of the recording films was exposed to a beam of semi-conductor laser (wavelength: 830 nm), kept at a non-recording power level (about 1 mW) and condensed by a lens in the recording head, through the substrate. The reflected light was detected to drive the head so that the center of the light spot could always fall onto the intermediate part between the tracking grooves, whereby the influence of noises generated from the grooves could be prevented. Automatic focusing was carried out so that the focus could fall on the recording film while conducting the tracking in this manner, and in the recording part recording was carried out by changing a laser power between an intermediate power level of 10 mW and a high power level of 18 mW, as shown in Fig. 3. A power ratio of the high power level to the intermediate power level was particularly preferably in a range of 1:0.4 to 1:0.6. Other power levels could be used at short intervals. The amorphous portion in the recorded part was regarded as a recording point. After the recording part, the laser power was lowered to 1 mW, and the tracking and automatic focusing were continued. During the recording, the tracking and autofocussing were continued. When such recording procedure was applied to the already recorded part, the recorded information was replaced with newly recorded information. That is, it was possible to make overwriting by a single circular light spot. It is the feature of the present recording film materials as disclosed in this Example that such overwriting is possible in this manner.

However, when the existing recording was erased by irradiation of a continuous laser beam of high power modulation level approximating to 18 mW, for example, a power level of 16 mW, at the first turn or a plurality of turn for the rewriting and a new recording was carried out with a laser beam of modulated power level between 10 mW and 18 mW according to an information signal at the next turn, complete erasing of the already recorded information could be assured and also a high ratio of carrier to noise could be obtained. In that case, good rewriting could be obtained with an continuous laser beam for the initial irradiation, when its power level was in a range of 0.8 to 1.1 on the basis of the high power level as 1. This procedure was effective not only for the present recording film, but also for recording films of other type.

Recording and erasing could be carried out in repetitions of at least 100. Without the $Si_3N_4$ layers over and below recording films, the noise was slightly increased after a few repetitions of recording and erasing.

Read-out was carried out in the following manner.

The disk was rotated at 1,800 rpm, and the intensity of reflected light of semi-conductor laser beam with such a low power not enough to effect recording and erasing was detected to reproduce information, while conducting the tracking and autofocussing in the same manner as in the recording. In this Example, reproduced signal voltage of about 100 mV was obtained. The recording film according to this Example had a good oxidation resistance. For example, the recording film without formation of the $Si_3N_4$ protective layer was not substantially oxidized even if placed at 60°C and a relative humidity of 95%.

In the foregoing recording film of Sn-Sb-Te-Se system, the necessary irradiation time for erasing was changed as follows, when the sum total of Te and Se contents was changed, while keeping a ratio of Sn to Sb and a ratio of Te to Se constant.

| Necessary irradiation time for erasing | |
|---|---|
| $Sn_{30}Sb_{64}Te_3Se_3$ | 5.0 µs (Comparative Ex.) |
| $Sn_{29}Sb_{61}Te_5Se_5$ | 1.0 µs |
| $Sn_{21}Sb_{44}Te_{17.5}Se_{17.5}$ | 0.5 µs |
| $Sn_{18.6}Sb_{40}Te_{20.7}Se_{20.7}$ | 0.1 µs |
| $Sn_{9.5}Sb_{20.5}Te_{35}Se_{35}$ | 0.1 µs |
| $Sn_6Sb_{14}Te_{40}Se_{40}$ | 0.5 µs |
| $Sn_{4.6}Sb_{10}Te_{42.7}Se_{42.7}$ | 1.0 µs |
| $Sn_4Sb_8Te_{44}Se_{44}$ | 5.0 µs (Comparative Ex.) |

The necessary laser beam power and degree of signal modulation for the recording were changed as follows, when a ratio of Te to Se was changed while keeping the Se content, Sb content and the sum total of Te and Se contents constant. When the Se content was increased, the thickness of the recording film was made a little larger.

| Necessary laser power for recording | |
|---|---|
| $Sn_{14}Sb_{30}Te_4Se_{52}$ | 22 mW (Comparative Ex.) |
| $Sn_{14}Sb_{30}Te_{5.1}Se_{50.9}$ | 20 mW |
| $Sn_{14}Sb_{30}Te_{9.4}Se_{46.6}$ | 18 mW |
| $Sn_{14}Sb_{30}Te_{11.2}Se_{44.8}$ | 16 mW |
| $Sn_{14}Sb_{30}Te_{44.8}Se_{11.2}$ | 16 mW |
| $Sn_{14}Sb_{30}Te_{46.6}Se_{9.4}$ | 16 mW |
| $Sn_{14}Sb_{30}Te_{50.9}Se_{5.1}$ | 16 mW |
| $Sn_{14}Sb_{30}Te_{52}Se_4$ | 16 mW (Comparative Ex.) |

| Degree of signal modulation | |
|---|---|
| $Sn_{14}Sb_{30}Te_4Se_{52}$ | 25 % (Comparative Ex.) |
| $Sn_{14}Sb_{30}Te_{5.1}Se_{50.9}$ | 25 % |
| $Sn_{14}Sb_{30}Te_{9.4}Se_{46.6}$ | 20 % |
| $Sn_{14}Sb_{30}Te_{11.2}Se_{44.8}$ | 20 % |
| $Sn_{14}Sb_{30}Te_{44.8}Se_{11.2}$ | 20 % |
| $Sn_{14}Sb_{30}Te_{46.6}Se_{9.4}$ | 15 % |
| $Sn_{14}Sb_{30}Te_{50.9}Se_{5.1}$ | 10 % |
| $Sn_{14}Sb_{30}Te_{52}Se_4$ | 5 % (Comparative Ex.) |

The necessary irradiation time for erasing was changed as follows, when the Sb content was changed, while keeping the ratio of other elements constant.

| Necessary irradiation time for erasing | |
|---|---|
| $Sn_{19}Sb_5Te_{38}Se_{38}$ | 5.0 µs (Comparative Ex.) |
| $Sn_{18}Sb_{10}Te_{36}Se_{36}$ | 1.0 µs |
| $Sn_{18}Sb_{12}Te_{35}Se_{35}$ | 0.5 µs |
| $Sn_{17}Sb_{14}Te_{34.5}Se_{34.5}$ | 0.1 µs |
| $Sn_{12}Sb_{40}Te_{24}Se_{24}$ | 0.1 µs |
| $Sn_{11}Sb_{45}Te_{22}Se_{22}$ | 0.5 µs |
| $Sn_6Sb_{70}Te_{12}Se_{12}$ | 1.0 µs |
| $Sn_5Sb_{75}Te_{10}Se_{10}$ | 5.0 µs (Comparative Ex.) |

The necessary laser beam power for recording and the necessary irradiation time for erasing were changed as follows, when the Sn content was changed while keeping the ratio of other elements constant.

| Necessary laser power for recording | |
|---|---|
| $Sn_2Sb_{34}Te_{32}Se_{32}$ | 16 mW (Comparative Ex.) |
| $Sn_3Sb_{34}Te_{31.5}Se_{31.5}$ | 16 mW |
| $Sn_5Sb_{33}Te_{31}Se_{31}$ | 16 mW |
| $Sn_7Sb_{32}Te_{30.5}Se_{30.5}$ | 16 mW |
| $Sn_{23}Sb_{27}Te_{25}Se_{25}$ | 16 mW |
| $Sn_{30}Sb_{24}Te_{23}Se_{23}$ | 18 mW |
| $Sn_{50}Sb_{17.4}Te_{16.3}Se_{16.3}$ | 20 mW |
| $Sn_{54}Sb_{16}Te_{15}Se_{15}$ | not recorded (Comparative Ex.) |

| Necessary irradiation time for erasing | |
|---|---|
| $Sn_2Sb_{34}Te_{32}Se_{32}$ | 2.0 µs (Comparative Ex.) |
| $Sn_3Sb_{34}Te_{31.5}Se_{31.5}$ | 1.0 µs |
| $Sn_5Sb_{33}Te_{31}Se_{31}$ | 0.5 µs |
| $Sn_7Sb_{32}Te_{30.5}Se_{30.5}$ | 0.1 µs |
| $Sn_{23}Sb_{27}Te_{25}Se_{25}$ | 0.1 µs |
| $Sn_{30}Sb_{24}Te_{23}Se_{23}$ | 0.1 µs |
| $Sn_{50}Sb_{17.4}Te_{16.3}Se_{16.3}$ | 0.1 µs |
| $Sn_{54}Sb_{16}Te_{15}Se_{15}$ | 0.1 µs (Comparative Ex.) |

The necessary irradiation time for erasing and the crystallization temperature when heated at a constant rate were changed as follows, when the composition was changed by adding $Sn(Te_{0.5}Se_{0.5})$ to $Sb_2(Te_{0.5}Se_{0.5})_3$.

| Necessary irradiation time for erasing | |
|---|---|
| $Sn_2Sb_{38}Te_{30}Se_{30}$ | 2.0 µs (Comparative Ex.) |
| $Sn_3Sb_{37.6}Te_{29.7}Se_{29.7}$ | 1.0 µs |
| $Sn_5Sb_{36}Te_{29.5}Se_{29.5}$ | 0.5 µs |
| $Sn_7Sb_{34.4}Te_{29.3}Se_{29.3}$ | 0.1 µs |
| $Sn_{23}Sb_{22}Te_{27.5}Se_{27.5}$ | 0.1 µs |
| $Sn_{30}Sb_{16}Te_{27}Se_{27}$ | 0.1 µs |
| $Sn_{37}Sb_{10}Te_{26.5}Se_{26.5}$ | 0.1 µs |
| $Sn_{40}Sb_8Te_{26}Se_{26}$ | 0.1 µs (Comparative Ex.) |

| Crystallization temperature | |
|---|---|
| $Sn_2Sb_{38}Te_{30}Se_{30}$ | 220 °C (Comparative Ex.) |
| $Sn_3Sb_{37.6}Te_{29.7}Se_{29.7}$ | 220 °C |
| $Sn_5Sb_{36}Te_{29.5}Se_{29.5}$ | 200 °C |
| $Sn_7Sb_{34.4}Te_{29.3}Se_{29.3}$ | 180 °C |
| $Sn_{23}Sb_{22}Te_{27.5}Se_{27.5}$ | 180 °C |
| $Sn_{30}Sb_{16}Te_{27}Se_{27}$ | 160 °C |
| $Sn_{37}Sb_{10}Te_{26.5}Se_{26.5}$ | 140 °C |
| $Sn_{40}Sb_8Te_{26}Se_{26}$ | 120 °C (Comparative Ex.) |

Addition of not more than 30 at.% preferably not more than 20 at.%, particularly preferably not more than 10 at.%, of rare earth elements such as Gd, etc. while keeping the ratio of other elements constant was effective for an increase in the crystallization temperature.

Also, addition of other elements represented by C was effective for a slight increase in the sensitivity.

A film thickness of the intermediate layer of 20 nm to 90 nm was most preferable with respect to a large erasing ratio. The smaller the film thickness, the higher the cooling rate after the irradiation of laser beam, and the more secure the formation of an amorphous state. However, it was possible to conduct recording and reproduction even in a film thickness range of 3 nm to 600 nm.

At least one of halogen elements and alkali metal elements could be added in place of a portion or all of Tl, whereby quite similar characteristics can be obtained. Among the halogen atoms of F, Cl, Br and I, I was particularly preferable and Cl was next preferable. Among the alkali metal elements of Li, Na, K, Rb and Cs, Na was particularly preferable and K was next preferable.

At least one of Au, Ag, Cu, Sc, Y, Zr, V, Nb, Cr, Mo, Mn, Fe, Ru, Ti, Rh, Ta, W, Ir and Ni could be added in place of a portion or all of Co, whereby quite similar characteristics could be obtained. Among them, at least one of Ti, V, Cr, Mn, Zr and Ni was preferable with respect of easy vapor deposition.

In place of Si3N4 as a protective layer and an intermediate layer, oxides such as $SiO_2$, SiO, $Al_2O_3$, $Y_2O_3$, etc., nitrides such as TaN, AlN, etc., sulfides such as ZnS, $Sb_2S_3$, etc., fluorides such as $CeF_3$, etc., and compositions similar to amorphous Si, $TiB_2$, C, $B_4C$, BC, etc. could be also used.

In place of An as a reflecting layer, Ag, Cu, Al, Ni, Fe, Co, Cr, Ti, Pd, Pt, W, Ta, Mo, etc. could be used, whereby similar characteristics could be obtained.

Example 2

The present invention will be described, referring to Fig. 4.

A UV light curing resin replica layer of tracking grooves also serving as a protective layer was formed on the surface of a disk form, chemically reinforced glass plate. The glass disk was 13 cm in diameter and 1.2 mm thick, one track was divided into 32 sectors, and track addresses and sector addresses were formed in the form of concave and convex pits at the individual intermediate summit parts between the grooves at the starting points of the individual sectors (these parts will be hereinafter referred to as "headers"). At first a $SiO_2$ layer $\underline{20}$, about 300 nm thick as a protective layer was formed on a substrate 19 by magnetron sputtering.

The $SiO_2$ layer may have some unevenness or fluctuation in the film thickness, because the $SiO_2$ layer has only a small difference in the refractive index from the substrate. Then, the substrate was disposed in a sputtering apparatus capable of successively forming lamination layers with a uniform film thickness and a good reproducibility, the apparatus having a plurality of targets, and ZnS was formed thereon to a film thickness of about 110 nm as a layer 21 by sputtering and then a recording film 22 having a composition of $Sn_{14.3}Sb_{28.6}Te_{57.1}$ was formed on the ZnS layer 21 to a film thickness of 30 nm in the same sputtering apparatus. Successively, a protective layer 23 of ZnS was formed thereon to a film thickness of about 50 nm in the same sputtering apparatus. Furthermore, a reflecting layer 24 of Au was formed thereon to a film thickness of about 50 nm and then a protective layer of ZnS 25 thereon to a film thickness of 150 nm in the same sputtering apparatus. Likewise, a $SiO_2$ layer 20', a ZnS layer 21', a recording film 22' having a composition of $Sn_{14.3}Sb_{28.6}Te_{57.1}$, a ZnS layer 23', an Au reflecting layer 24' and a ZnS layer 25' were successively formed on another similar substrate 19'. The thus prepared two substrates were joined together by pasting through an organic adhesive layer 26 so that the layers 25 and 25' could be faced inwardly. When the joining was made on the entire surface, number of rewriting could be increased in that case, and when no adhesive was provided in the recording area, the recording sensitivity could be a little increased.

The thus prepared disk was subjected to recording, reproduction and erasing in the following manner.

The disk was rotated at 1,800 rpm, and one of the recording films was exposed to a beam of semi-conductor laser (wavelength: 830 nm), kept at a non-recording power level and condensed by a lens in the recording head, through the substrate. The reflected light was detected to drive the head so that the center of the light spot could always fall onto the intermediate part between the adjacent tracking grooves. By utilizing the intermediate part between the adjacent tracking grooves as a recording track, the influence of noises generated from the grooves could be prevented. Automatic focusing was carried out so that the focus could fall on the recording film while conducting the tracking in this manner. At first, the recording film on the recording track was heated by continuous irradiation of a laser beam of high power density to subject the individual elements to reaction and crystallization.

An appropriate laser power range for the formation of an amorphous state was higher than the power for the crystallization and lower than the power capable of causing a remarkable transformation or making holes. An appropriate laser power range for the crystallization was high enough to cause the crystallization and lower than the power for causing formation of an amorphous state.

Recording in the optical disk drive (recording and reproducing apparatus) was carried out in the following manner.

The disk was rotated at 1,800 rpm, and one of the recording films was exposed to a beam of semi-conductor laser (wavelength: 830 nm), kept at a non-recording power level (about 1 mW) and condensed by a lens in the recording head, through the substrate. The reflected light was detected to drive the head so that the center of the light spot could always fall onto the intermediate part between the tracking grooves, whereby the influence of noises generated from the grooves could be prevented. Automatic focusing was carried out so that the focus could fall on the recording film while conducting the tracking in this manner, and in the recording part recording was carried out by changing a laser power between an intermediate power level of 11 mW and a high power level of 18 mW, as shown in Fig. 5. A power ratio of the high power level to the intermediate power level is particularly preferably in a range of 1:0.4 to 1:0.8. Other power levels can be used at short intervals. The amorphous portion in the recorded part was regarded as a recording point. After the recording part, the laser power was lowered to 1 mW, and the tracking and automatic focusing were continued. During the recording, the tracking and autofocussing were continued. When such recording procedure was applied to the already recorded part, the recorded information was replaced with newly recorded information. That is, it was possible to make overwriting by a single circular light spot. It is the feature of the present recording film material as disclosed in this Example that such overwriting is possible in this manner.

However, when the existing recording was erased by irradiation of a continuous laser beam of high power modulation levels approximately to 18 mW, for example, a power level of 16 mW, at the first turn or a plurality of turns for the rewriting and a new recording was carried out with a laser beam of modulated power level between 11 mW and 18 mW according to an information signal at the next turn, complete erasing of the already recorded information could be assured and also a high ratio of carrier to noise could be obtained. In that case, good rewriting could be obtained with an continuous laser beam for the initial irradiation, when its power level was in a range of 0.8 to 1.1 off the basis of the high power level as 1. This procedure was effective not only for the present recording film, but also for recording films of other type.

Recording and erasing could be carried out in repetitions of at least $10^5$. Without the ZnS layers over and below recording films, the noise was slightly increased after a few repetitions of recording and erasing.

Read-out was carried out in the following manner.

The disk was rotated at 1,800 rpm, and the intensity of reflected light of semi-conductor laser beam with such a lower power not enough to effect recording and erasing was detected to reproduce information, while conducting the tracking and auto-focussing in the same manner as in the recording. In this Example, reproduced signal voltage of about 100 mV was obtained. The recording film according to this Example had a good oxidation resistance. For example, the recording film without formation of the ZnS protective layer was not substantially oxidized even if placed at 60°C and a relative humidity of 95%.

In the foregoing Sn-Sb-Te-based recording films, the necessary irradiation time for erasing was changed as follows, when the Te content was changed, while keeping the ratio of other elements constant.

| Necessary irradiation time for erasing | |
|---|---|
| $Sn_{31}Sb_{62}Te_7$ | 5.0 µs (Comparative Ex.) |
| $Sn_{30}Sb_{60}Te_{10}$ | 1.0 µs |
| $Sn_{21.7}Sb_{43.3}Te_{35}$ | 0.5 µs |
| $Sn_{17.7}Sb_{35.3}Te_{47}$ | 0.1 µs |
| $Sn_{10}Sb_{20}Te_{70}$ | 0.1 µs |
| $Sn_{6.7}Sb_{13.3}Te_{80}$ | 0.5 µs |
| $Sn_5Sb_{10}Te_{85}$ | 1.0 µs |
| $Sn_4Sb_8Te_{88}$ | 5.0 µs (Comparative Ex.) |

The necessary irradiation time for erasing was changed as follows, when the Sb content was changed, while keeping a ratio of other elements constant.

| Necessary irradiation time for erasing | |
|---|---|
| $Sn_{19.4}Sb_3Te_{77.6}$ | 5.0 µs (Comparative Ex.) |
| $Sn_{19}Sb_5Te_{76}$ | 1.0 µs |
| $Sn_{18}Sb_{10}Te_{72}$ | 0.5 µs |
| $Sn_{17.4}Sb_{13}Te_{69.6}$ | 0.1 µs |
| $Sn_{12}Sb_{40}Te_{48}$ | 0.1 µs |
| $Sn_{11}Sb_{45}Te_{44}$ | 0.5 µs |
| $Sn_6Sb_{70}Te_{24}$ | 1.0 µs |
| $Sn_5Sb_{75}Te_{20}$ | 5.0 µs (Comparative Ex.) |

The necessary laser beam power for recording and the necessary irradiation time for erasing were changed as follows, when the Sn content was changed while keeping the ratio of other elements constant.

| Necessary laser beam power for recording | |
|---|---|
| $Sn_1Sb_{33}Te_{66}$ | 16 mW (Comparative Ex.) |
| $Sn_3Sb_{32.3}Te_{64.7}$ | 16 mW |
| $Sn_5Sb_{31.7}Te_{63.3}$ | 16 mW |
| $Sn_7Sb_{31}Te_{62}$ | 16 mW |
| $Sn_{23}Sb_{25.7}Te_{51.3}$ | 16 mW |
| $Sn_{30}Sb_{23.3}Te_{46.7}$ | 18 mW |
| $Sn_{50}Sb_{16.7}Te_{33.3}$ | 20 mW |
| $Sn_{55}Sb_{15}Te_{30}$ | not recorded (Comparative Ex.) |

| Necessary irradiation time for erasing | |
|---|---|
| $Sn_1Sb_{33}Te_{66}$ | 2.0 µs (Comparative Ex.) |
| $Sn_3Sb_{32.3}Te_{64.7}$ | 1.0 µs |
| $Sn_5Sb_{31.7}Te_{63.3}$ | 0.5 µs |
| $Sn_7Sb_{31}Te_{62}$ | 0.1 µs |
| $Sn_{23}Sb_{25.7}Te_{51.3}$ | 0.1 µs |
| $Sn_{30}Sb_{23.3}Te_{46.7}$ | 0.5 µs |
| $Sn_{50}Sb_{16.7}Te_{33.3}$ | 0.5 µs |
| $Sn_{55}Sb_{15}Te_{30}$ | 0.5 µs (Comparative Ex.) |

The necessary irradiation time for erasing and the crystallization temperature, when heated at a constant rate, were changed as follows, when the composition was changed along the straight line connecting $Sb_2Te_3$ to SnTe on the ternary phase diagram of Sn-Sb-Te.

| The necessary irradiation time for erasing | |
|---|---|
| $Sn_2Sb_{38.5}Te_{59.5}$ | 2.0 µs (Comparative Ex.) |
| $Sn_3Sb_{37.6}Te_{59.4}$ | 1.0 µs |
| $Sn_5Sb_{36}Te_{59}$ | 0.5 µs |
| $Sn_7Sb_{34.4}Te_{58.6}$ | 0.1 µs |
| $Sn_{23}Sb_{21.6}Te_{55.4}$ | 0.1 µs |
| $Sn_{30}Sb_{16}Te_{54}$ | 0.1 µs |
| $Sn_{43.8}Sb_5Te_{51.2}$ | 0.1 µs |
| $Sn_{45}Sb_4Te_{51}$ | 0.1 µs (Comparative Ex.) |

| Crystallization temperature | |
|---|---|
| $Sn_2Sb_{38.5}Te_{59.5}$ | 220°C (Comparative Ex.) |
| $Sn_3Sb_{37.6}Te_{59.4}$ | 220°C |
| $Sn_5Sb_{36}Te_{59}$ | 200°C |
| $Sn_7Sb_{34.4}Te_{58.6}$ | 180°C |
| $Sn_{23}Sb_{21.6}Te_{55.4}$ | 180°C |
| $Sn_{30}Sb_{16}Te_{54}$ | 160°C |
| $Sn_{43.8}Sb_5Te_{51.2}$ | 140°C |
| $Sn_{45}Sb_4Te_{51}$ | 120°C (Comparative Ex.) |

Simultaneous addition of Tl and Co while keeping the ratio of other elements constant was effective for an increase in the degree of signal modulation.

Addition of not more than 30 at.%, preferably not more than 20 at.%, particularly preferably not more than 20 at.%, of rare earth elements such as Gl, etc. while keeping the ratio of other elements constant was effective for an increase in the crystallization temperature.

Also, addition of other elements represented by D was effective for a slight increase in the sensitivity, an increase in the oxidation resistance, etc.

A film thickness of the intermediate layer of 60/N nm to 160/N nm where N is the refractive index of the intermediate layer, was preferable with respect to a large erasing ratio. The smaller the film thickness, the higher the cooling rate after the irradiation of laser beam, and the more secure the formation of an amorphous state. However, it was possible to conduct recording and reproduction even in a film thickness range of 3 nm to 600 nm.

At least one of Bi, Pb, Ga, Au and In could be added in place of a portion or all of Sn, whereby similar characteristics could be obtained.

In $Au_{14.3}Sb_{28.6}Te_{57.1}$ where Sn was replaced with Au, the necessary laser beam power for recording was changed as follows, when the Te content was changed while keeping the ratio of other elements constant.

| | |
|---|---|
| y = 47 | 20 mW |
| y = 55 | 18 mW |
| y = 60 | 16 mW |
| y = 70 | 16 mW |

When a portion or all of Sn was replaced with Bi and the ZnS layer was entirely changed to the $Sb_2Se_3$, diffusion of Bi into the adjacent layers took place, whereby such characteristics as a high recording sensitivity and a sharp rise of recording power-reproduced signal intensity curve could be obtained, but changes in the characteristics by repetitions of rewriting became large.

When at least one element of halogens and alkali metals was added in place of a portion or all or Tl, quite similar characteristics were obtained. I was particularly preferable among the halogens F, C, Br and I, and Cl is next preferable. Na was particularly preferable among the alkali metals Li, Na, K, Rb and Cs, and K was next preferable.

At least one of Cu, Ag, Sc, Y, Zr, V, Nb, Cr, Mo, Mn, Fe, Ru, Ti, Rh, Ta, W, Ir, and Ni could be added in place of a portion or all of Co, whereby quite similar characteristics could be obtained. At least one of Ti, V, Cr, Mn, Zr and Ni was preferable among them, because of easy vapor deposition.

In place of ZnS used in at least one of the protective layer and the intermediate layer, oxides such as $SiO_2$, SiO,

$Y_2O_3$, nitrides such as TaN, AlN, $Si_3N_4$, etc., sulfides such as $Sb_2S_3$, etc., selenides such as $SnSe_2$, $SbSe_2$, etc., fluorides such as $CeF_3$, etc. or amorphous materials of Si, $TiB_2$, $B_4C$, BC, etc. or materials having a composition approximating to any of the foregoing materials could be used. Lamination film of these materials (double or more than double layer) was effective for an increase in the protective strength. For example, a double layer structure of a 300 nm-thick $SiO_2$ layer provided on the or side from the recording film and a 110 nm-thick ZnS layer provides on the near side from the recording film had less change in the characteristics by rewriting and was found better.

As a reflecting layer, Ag, Cu, Ni, Fe, Al, Co, Cr, Ti, Pd, Pt, W, Ta, Mo, etc. could be used in place of a portion or all of Au, whereby similar characteristics could be obtained.

As a substrate, a polycarbonate plate, a polyolefin plate, an epoxy resin plate, an acrylic resin plate, etc. with concave and convex parts such as tracking guides, directly provided on the surface, could be used in place of the chemically reinforced glass plate with a UV curing resin layer formed on the surface.

Example 3

A UV light curing resin replica layer of tracking grooves serving also as a protective layer was formed on the surface of a disk form, chemically reinforced glass plate. The glass disk was 13 cm in diameter and 1.2 mm thick, and one track was divided into 32 sectors, and track addresses and sector addresses were formed in the form of concave and convex pits at the individual intermediate summit parts between the grooves at the starting points of the individual sectors (these parts will be hereinafter referred to as "headers"). At first a $Si_3N_4$ layer, about 300 nm thick, as a protective layer was formed on a substrate 14 by magnetron sputtering. Then, the substrate was disposed in a vacuum evaporation apparatus having an internal structure as shown in Fig. 2, and 4 evaporation sources 1, 2, 3 and 4 were provided in the evaporation apparatus. Three of the evaporation sources were evaporation boats by resistance heating and one thereof was an electron beam evaporation source. These boats and electron beam evaporation source were provided under parts on the substrate 14 destined to record information and substantially on a circumference concentric with the center axis of rotation of the substrate. Sn, Sb and Te were placed in the three evaporation boats, respectively, and Te was placed in the electron beam evaporation source. Between the individual boats and the substrate there were provided masks 6, 7, 8 and 9 having a sector slit and shutters 10, 11, 12 and 13. The substrate 14 was set to rotate at 120 rpm, while an electric current was passed to the individual boats and the electron beam evaporation source was irradiated with an electron beam to evaporate the source materials.

The evaporating rates from the individual evaporation sources were detected by quartz-crystal type film thickness monitors 15, 16, 17 and 18 to control the electric current thereby to make the evaporation rates constant.

As shown in Fig. 1 and in the same manner as in Examples 1 a recording film 21 having the composition of $Sn_{15}Sb_{30}Te_{55}$ was vapor deposited to a film thickness of about 80 nm on the $Si_3N_4$ layer 20 on the substrate 19. Then, a protective layer 22 having a composition substantially equal to $Si_3N_4$ was successively formed to a film thickness of about 100 nm thereon also by magnetron sputtering. Furthermore, a reflecting layer 23 of Au was formed to a film thickness of about 50 nm thereon by electron beam vapor deposition. Likewise, a protective layer 20' having a composition substantially equal to $Si_3N_4$ on another similar substrate 19', and a recording film 21' having the composition of $Sn_{15}Sb_{30}Te_{55}$, a protective layer 22' having a composition substantially equal to $Si_3N_4$ and a reflecting layer 23' of Au were successively formed thereon.

Then, $Si_3N_4$ protective layers 24 and 24' were formed each to a film thickness of about 200 nm on the vapor-deposited layers 23 and 23' of the thus obtained two substrates 19 and 19', respectively, and the thus obtained two substrates 19 and 19' were joined together by pasting through an organic adhesive layer 25 so that the layers 24 and 24' could be faced inwardly. In this manner, a disk could be prepared.

The thus prepared disk was subjected to recording, reproduction and erasing in the following manner:

The disk was rotated at 1,800 rpm, and one of the recording films was exposed to a beam of argon ion laser (wavelength: 830 nm), kept at a non-recording level and condensed by a lens in the recording head, through the substrate. The reflected light was detected to drive the head so that the center of the light spot could always fall onto the intermediate part between the tracking grooves. The influence of noises generated from the grooves could be prevented by making the intermediate part between the grooves a recording track. Automatic focussing was carried out so that the focus could fall on the recording film while conducting the tracking in this manner. At first, the recording film on the recording tracks was heated by continuous irradiation of a laser beam of high power density to subject the individual elements to reaction and crystallization.

An appropriate laser power range for the formation of an amorphous state was higher than the power for the crystallization and lower than the power capable of causing a remarkable transformation or making holes. An appropriate laser power range for the crystallization was high enough to cause the crystallization and lower than the power for causing formation of an amorphous state.

Recording in the optical disk drive (recording and reproducing apparatus) was carried out in the following manner.

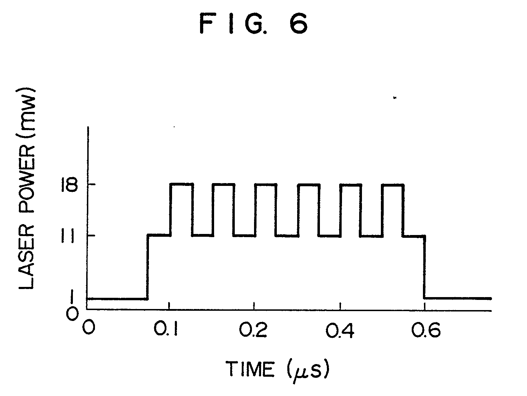

The disk was rotated at 1,800 rpm, and one of the recording films was exposed to a beam of semi-conductor laser (wavelength: 830 nm), kept at a non-recording power level (about 1 mW) and condensed by a lens in the recording head, through the substrate. The reflected light was detected to drive the head so that the center of the light spot could always fall onto the intermediate part between the tracking grooves, whereby the influence of noises generated from the grooves could be prevented. Automatic focusing was carried out so that the focus could fall on the recording film while conducting the tracking in this manner, and in the recording part recording was carried out by changing a laser power between an intermediate power level of 11 mW and a high power level of 18 mW, as shown in Fig. 6. A power ratio of the high power level to the intermediate power level was particularly preferably in a range of 1:0.75 to 1:0.9. Other power levels could be used at short intervals. The amorphous portion in the recorded part was regarded as a recording point. After the recording part, the laser power was lowered to 1 mW, and the tracking and automatic focusing were continued. During the recording, the tracking and autofocussing were continued. When such recording procedure was applied to the already recorded part, the recorded information was replaced with newly recorded information. That is, it was possible to make overwriting by a single circular light spot. It is the feature of the present recording film materials as disclosed in this Example that such overwriting is possible in this manner.

However, when the existing recording was erased by irradiation of a continuous laser beam of high power modulation level approximating to 18 mW, for example, a power level of 16 mW, at the first turn or a plurality of turn for the rewriting and a new recording was carried out with a laser beam of modulated power level between 11 mW and 18 mW according to an information signal at the next turn, complete erasing of the already recorded information could be assured and also a high ration of carrier to noise could be obtained. In that case, good rewriting could be obtained with an continuous laser beam for the initial irradiation, when its power level was in a range of 0.8 to 1.1 on the basis of the high power level as 1. This procedure was effective not only for the present recording film, but also for recording films of other type.

Recording and erasing could be carried out in repetitions of at least 100. Without the $Si_3N_4$ layers over and below recording films, the noise was slightly increased after a few repetitions of recording and erasing.

Read-out was carried out in the following manner.

The disk was rotated at 1,800 rpm, and the intensity of reflected light of semi-conductor laser beam with such a low power not enough to effect recording and erasing was detected to reproduce information, while conducting the tracking and autofocussing in the same manner as in the recording. In this Example, reproduced signal voltage of about 100 mV was obtained. The recording film according to this Example had a good oxidation resistance. For example, the recoridng film without formation of the $Si_3N_4$ protective layer was not substantially oxidized even if placed at 60°C and a relative humidity of 95%.

As described in detail in the foregoing, an information-recording member having a good reproducibility, good recording and reproducing characteristics and a long stability can be obtained by a simple method in the present invention. Rewriting of recording can be made in a large number of repetitions.

## Claims

1. A thin film for recording information, capable of changing atomic arrangement upon exposure to a recording beam and comprising Sn, Te and Se,
   **characterized** in that
   the thin film has a thickness in the range from 15 nm to 150 nm, and the average composition in the film thickness direction of the information recording thin film is represented by the general formula

   $$Sn_xSb_yTe_zSe_\alpha A_\beta B_\gamma C_\delta,$$

   wherein x, y, z, $\alpha$, $\beta$, $\gamma$, $\delta$ are atomic percentages in ranges of $3 \leq x \leq 50$, $10 \leq y \leq 70$, $10 \leq z+\alpha \leq 87$, $0,1 \leq z/\alpha \leq 10$, $0 \leq \beta \leq 20$, $0 \leq \gamma \leq 30$ and $0 \leq \delta \leq 30$, A being at least one element of Tl, halogens, and alkali metals, B being at least one element of Au, Ag, Cu, Pd, Ta, W, Ir, Sc, Y, Ti, Zr, V, Nb, Cr, Mo, Mn, Fe, Ru, Co, Rh and Ni, and C is at least one of other elements than Sn, Sb, Te, Se and those represented by A and B.

2. A thin film for recording information, capable of changing an atomic arrangement upon exposure to a recording beam and comprising Te,
   characterized in that
   the thin film has a thickness in the range from 15 to 150 nm, and the average composition in the film thickness direction of the information recording thin film is represented by the general formula

   $$Sb_xTe_yA'_zB'_\alpha C'_\beta D_\gamma,$$

   wherein x, y, z, $\alpha$, $\beta$ and $\gamma$ are atomic percentages in ranges of $5 \leq x \leq 70$, $10 \leq y \leq 85$, $3 \leq z \leq 30$, $0 \leq \alpha \leq 20$, $0 \leq \beta \leq 30$ and $0 \leq \gamma \leq 10$, A' being at least one element of Sn, Bi, Pb, Ga, Au and In, B' being at least one element of Tl, halogens and alkali metals, C' being at least one element of Ag, Cu, Pd, Ta, W, Ir, Sc, Y, Ti, Zr, V, Nb, Cr, Mo, Mn, Fe, Ru, Co, Rh and Ni, and D being at least one of other elements than Sb, Te and those represented by A', B' and C'.

3. An information recording medium comprising a substrate (19, 19') and an information recording thin film (21, 21') formed on the substrate,
**characterized** in that
the information recording thin film is a thin film according to claim 1 or 2.

4. An information recording medium according to claim 3, characterized by
a protective layer (20, 20') composed of at least one of inorganic materials and organic materials and formed between the substrate and the information recording thin film.

5. A method for recording and reproducing information comprising the step of exposing to a recording beam an information recording thin film provided on a substrate directly or through a protective layer, thereby changing the atomic arrangement at the exposed part of the thin film, and a step of exposing the thin film to a reproducing beam, thereby reading out the change in the atomic arrangement by detecting a change in the reflectivity, characterized in that the information recording thin film is a thin film according to claim 1 or 2.

6. A method according to claim 5,
characterized in that
the recording beam is a laser beam.

## Patentansprüche

1. Eine Dünnschicht zum Aufzeichnen von Information, die in der Lage ist, die atomare Anordnung zu ändern, wenn sie einem Aufzeichnungsstrahl ausgesetzt wird, und die Sn, Te und Se enthält,
dadurch **gekennzeichnet**, daß
die Dünnschicht eine Dicke in dem Bereich von 15 nm bis 150 nm hat, und die durchschnittliche Zusammensetzung in der Schichtdickenrichtung der Informationsaufzeichnungsdünnschicht durch die allgemeine Formel

$$Sn_xSb_yTe_zSe_\alpha A_\beta B_\gamma C_\delta$$

gegeben ist, wobei x, y, z, $\alpha$, $\beta$, $\gamma$, $\delta$ atomare Prozentsätze in Bereichen von $3 \leq x \leq 50$, $10 \leq y \leq 70$, $10 \leq z+\alpha \leq 87$, $0,1 \leq z/\alpha \leq 10$, $0 \leq \beta \leq 20$, $0 \leq \gamma \leq 30$ und $0 \leq \delta \leq 30$ sind, A mindestens ein unter Tl, Halogenen und Alkalimetallen ausgewähltes Element ist, B mindestens ein unter Au, Ag, Cu, Pd, Ta, W, Ir, Sc, Y, Ti, Zr, V, Nb, Cr, Mc, Mn, Fe, Ru, Co, Rh und Ni ausgewähltes Element ist und C mindestens ein von Sn, Sb, Te, Se und den von A und B dargestellten Elementen verschiedenes Element ist.

2. Eine Dünnschicht zum Aufzeichnen von Information, die in der Lage ist, die atomare Anordnung zu ändern, wenn sie einem Aufzeichnungsstrahl ausgesetzt wird, und die Te enthält,
dadurch gekennzeichnet, daß
die Dünnschicht eine Dicke in dem Bereich von 15 nm bis 150 nm hat, und die durchschnittliche Zusammensetzung in der Schichtdickenrichtung der Informationsaufzeichnungsdünnschicht durch die allgemeine Formel

$$Sb_xTe_yA'_zB'_\alpha C'_\beta D_\gamma$$

gegeben ist, wobei x, y, z, $\alpha$, $\beta$, $\gamma$, $\delta$ atomare Prozentsätze in Bereichen von $5 \leq x \leq 70$, $10 \leq y \leq 85$, $3 \leq z \leq 30$, $0 \leq \alpha \leq 20$, $0 \leq \beta \leq 30$ und $0 \leq \gamma \leq 10$ sind, A' mindestens ein unter Sn, Bi, Pb, Ga, Au und In ausgewähltes Element ist, B' mindestens ein unter Tl, Halogenen und Alkalimetallen ausgewähltes Element, C mindestens ein unter Ag, Cu, Pd, Ta, W, Ir, Sc, Y, Ti, Zr, V, Nb, Cr, Mo, Mn, Fe, Ru, Co, Rh und Ni ausgewähltes Element ist und D mindestens ein von Sb, Te und den durch A', B' und C' dargestellten Elementen verschiedenes Element ist.

3. Informationsaufzeichnungsmedium mit einem Substrat (19, 191) und einer Informationsaufzeichnungsdünnschicht (21, 211), die auf dem Substrat gebildet ist,
dadurch gekennzeichnet, daß
die Informationsaufzeichnungsdünnschicht eine Dünnschicht gemäß Anspruch 1 oder 2 ist.

4. Informationsaufzeichnungsmedium gemäß Anspruch 3, gekennzeichnet durch
eine Schutzschicht (20, 201) aus anorganischen und/oder organischen Materialien, die zwischen dem Substrat und der Informationsaufzeichnungsdünnschicht angeordnet ist.

5. Verfahren zum Aufzeichnen und Wiedergeben von Information, mit einem Schritt, bei dem eine Informationsaufzeichnungsdünnschicht, die auf einem Substrat direkt oder über eine Schutzschicht angebracht ist, einem Aufzeichnungsstrahl ausgesetzt wird, wodurch die atomare Anordnung am belichteten Teil der Dünnschicht verändert wird, und einem Schritt, bei dem die Dünnschicht einem Wiedergabestrahl ausgesetzt wird, wodurch die Veränderung in der atomaren Anordnung durch Erfassen einer Veränderung der Reflektivität ausgelesen wird,
dadurch gekennzeichnet, daß
die Informationsaufzeichnungsdünnschicht eine Dünnschicht gemäß Anspruch 1 oder 2 ist.

6. Verfahren gemäß Anspruch 5,
dadurch gekennzeichnet, daß
der Aufzeichnungsstrahl ein Laserstrahl ist.

## Revendications

1. Pellicule mince destinée à l'enregistrement d'informations, qui peut changer sa disposition atomique à la suite d'une exposition à un faisceau d'enregistrement et qui comprend Sn, Te et Se,
caractérisée en ce que la pellicule mince possède une épaisseur comprise dans l'intervalle de 15 nm à 150 nm, et la composition moyenne suivant la direction d'épaisseur de la pellicule mince d'enregistrement d'informations est représentée par la formule générale :

$$Sn_xSb_yTe_zSe_\alpha A_\beta B_\gamma C_\delta,$$

où x, y, z, $\alpha$, $\beta$, $\gamma$ et $\delta$ sont des pourcentages atomiques compris dans les intervalles suivants : $3 \leq x \leq 50$, $10 \leq y \leq 70$, $10 \leq z+\alpha \leq 87$, $0,1 \leq z/\alpha \leq 10$, $0 \leq \beta \leq 20$, $0 \leq \gamma \leq 30$ et $0 \leq \delta \leq 30$, A étant au moins un élément pris parmi Tl, les halogènes et les métaux alcalins, B étant au moins un élément pris parmi Au, Ag, Cu, Pd, Ta, W, Ir, Sc, Y, Ti, Zr, V, Nb, Cr, Mo, Mn, Fe, Ru, Co, Rh et Ni, et C est au moins un élément pris parmi les éléments autres que Sn, Sb, Te et Se et que ceux représentés par A et B.

2. Pellicule mince destinée à l'enregistrement d'informations, qui peut changer sa disposition atomique à la suite d'une exposition à un faisceau d'enregistrement et qui comprend Te,
caractérisée en ce que la pellicule mince possède une épaisseur comprise dans l'intervalle de 15 nm à 150 nm, et la composition moyenne suivant la direction d'épaisseur de la pellicule mince d'enregistrement d'informations est représentée par la formule générale :

$$Sb_xTe_yA'_zB'_\alpha C'_\beta D_\gamma,$$

où x, y, z, $\alpha$, $\beta$ et $\gamma$ sont des pourcentages atomiques compris dans les intervalles suivants : $5 \leq x \leq 70$, $10 \leq y \leq 85$, $3 \leq z \leq 30$, $0 \leq \alpha \leq 20$, $0 \leq \beta \leq 30$, $0 \leq \gamma \leq 10$, A' étant au moins un élément pris parmi Sn, Bi, Pb, Ga, Au et In, B' étant au moins un élément pris parmi Tl, les halogènes et les métaux alcalins, C' étant au moins un élément pris parmi Ag, Cu, Pd, Ta, W, Ir, Sc, Y, Ti, Zr, V, Nb, Cr, Mo, Mn, Fe, Ru, Co, Rh et Ni, et D étant au moins un élément pris parmi les éléments autres que Sb, Te et que ceux représentés par A', B' et C'.

3. Support d'enregistrement d'informations comprenant un substrat (19, 19') et une pellicule mince d'enregistrement d'informations (21, 21') formée sur le substrat,
caractérisé en ce que la pellicule mince d'enregistrement d'informations est une pellicule mince selon la revendication 1 ou 2.

4. Support d'enregistrement d'informations selon la revendication 3, caractérisé par une couche protectrice (20, 20') composée d'au moins un élément pris parmi les matières inorganiques et les matières organiques et formé entre le substrat et la pellicule mince d'enregistrement d'informations.

5. Procédé d'enregistrement et de reproduction d'informations, comprenant l'opération qui consiste à exposer à un faisceau d'enregistrement une pellicule mince d'enregistrement d'informations placée sur un substrat directement ou à travers une couche protectrice, de manière à changer la disposition atomique dans la partie exposée de la pellicule mince, et une opération consistant à exposer la pellicule mince à un faisceau de reproduction, de manière à lire le changement effectué dans la disposition atomique par détection d'un changement de la réflectivité, caractérisé en ce que la pellicule mince d'enregistrement d'informations est une pellicule mince selon la revendication 1 ou 2.

6.  Procédé selon la revendication 5, caractérisé en ce que le faisceau d'enregistrement est un faisceau laser.

# F I G. I

# F I G. 2

# F I G. 3

# F I G. 4

# F I G. 5

F I G. 6